(19) Europäisches Patentamt
European Patent Office
Office européen des brevets

(11) **EP 4 475 071 A1**

(12) **EUROPEAN PATENT APPLICATION**

(43) Date of publication:
**11.12.2024  Bulletin 2024/50**

(21) Application number: **23177807.7**

(22) Date of filing: **06.06.2023**

(51) International Patent Classification (IPC):
**G06T 7/00** *(2017.01)*    **G06T 7/11** *(2017.01)*
**G06T 7/194** *(2017.01)*

(52) Cooperative Patent Classification (CPC):
**G06T 7/0012; G06T 7/11; G06T 7/194;**
G06T 2207/10081; G06T 2207/10088;
G06T 2207/20076; G06T 2207/20084;
G06T 2207/30096

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Guerbet**
**93420 Villepinte (FR)**

(72) Inventors:
• **DEBS, Noëlie**
  **75014 PARIS (FR)**
• **ROUTIER, Alexandre**
  **94300 VINCENNES (FR)**
• **ABI-NADER, Clément**
  **75012 PARIS (FR)**
• **Bône, Alexandre**
  **75009 PARIS (FR)**
• **Rohé, Marc-Michel**
  **92120 MONTROUGE (FR)**

(74) Representative: **Plasseraud IP**
**104 Rue de Richelieu
CS92104
75080 Paris Cedex 02 (FR)**

(54) **METHOD FOR DETERMINING A PROBABILITY OF THE PRESENCE OF AT LEAST ONE CANDIDATE LESION IN AT LEAST ONE MEDICAL IMAGE**

(57)    The invention relates to a method implemented by computer means for determining a probability of the presence of at least one candidate lesion in at least one medical image, said method including an inference phase comprising the following steps:
- segmenting said at least one candidate lesion on said image using a trained segmentation model, to obtain at least one segmented region representing the location of the at least one candidate lesion in the image, said at least one segmented region being a connected component and being associated to a probability that said connected component is a lesion,
- detecting said at least one candidate lesion on said image using a trained detection model, to obtain at least one bounding box representing the location of the candidate lesion in said image, said at least one bounding box being associated to a probability that said bounding box is a lesion,
- matching the at least one connected component obtained by the segmentation model to a corresponding bounding box obtained by the detection model,
- predicting the probability that said at least one connected component obtained by the segmentation model is a lesion, based on both the probability obtained by the segmentation model for the corresponding connected component and the probability obtained by the detection model of the bounding box that match with said corresponding connected component.

Fig. 2

**Description**

FIELD OF THE INVENTION

The present invention relates to a method implemented by computer means for determining a probability of the presence of at least one candidate lesion in at least one medical image.

BACKGROUND OF THE INVENTION

Over the last 10 years, many deep learning methods have been proposed to detect cancerous lesions on medical images. In one hand, semantic segmentation methods such as the U-Net perform voxel-level classification, thus providing precise dense contours of the lesion to be detected. However, this approach often requires post-processing steps to aggregate voxels predictions into lesion-level prediction and is typically biased towards large-size objects. On the other hand, object detection methods like Feature Pyramid Networks (FPN) propose to classify boxes within an image, which can be applied to medical images in order to localize and characterize lesions. While box-based detection methods are less sensitive to large variations in target object sizes, they are fundamentally limited in their capacity to accurately describe lesion localization. In addition, depending on the considered imaging modality and clinical application, both frameworks may lead to different levels of performances, thus raising the problem of choosing the right modeling approach.

Recent studies attempted to bridge the gap between semantic segmentation and object detection methods: among them, mask R-CNN or Retina U-Net both propose a single architecture able to segment and classify lesions. To do so, they rely on a cost function combining a box regression, box classification, and segmentation loss. While these models are able to compute voxel-based predictions, they are primarily optimized to produce bounding boxes and evaluated accordingly, with the semantic segmentation component of the total loss acting as a regularizer.

SUMMARY OF THE INVENTION

The present document proposes a method that aims to benefit from both semantic segmentation and box-based object detection methods.

To that aim, the present document proposes a method implemented by computer means for determining a probability of the presence of at least one candidate lesion in at least one medical image, said method including an inference phase comprising the following steps:

(a) segmenting said at least one candidate lesion on said image using a trained segmentation model, to obtain at least one segmented region representing the location of the at least one candidate lesion in the image, said at least one segmented region being a connected component and being associated to a probability that said connected component is a lesion,

(b) detecting said at least one candidate lesion on said image using a trained detection model, to obtain at least one bounding box representing the location of the candidate lesion in said image, said at least one bounding box being associated to a probability that said bounding box is a lesion,

(c) matching the at least one connected component obtained by the segmentation model to a corresponding bounding box obtained by the detection model,

(d) predicting the probability, also called confidence score, that said at least one connected component obtained by the segmentation model is a lesion, based on both the probability obtained by the segmentation model for the corresponding connected component and the probability obtained by the detection model of the bounding box that match with said corresponding connected component.

Step (a) may be performed in parallel or prior to step (b).

A segmentation model is a type of deep learning model that is used to segment an image into different regions or categories. In the case of a 3D image as input for example, the segmentation model is used to identify and segment the different objects or regions present within the 3D volume.

The output of a segmentation model is a mask or a set of masks that indicates the boundaries of the segmented objects or regions in the input image. In the example of a 3D image, the output will also be in the form of a 3D volume with a binary value for each voxel (volume pixel) indicating whether it belongs to the segmented object or not.

The probability in the output refers to the confidence of the model in its prediction of the segmentation of the input image. For each voxel in the output, the probability value indicates the likelihood that it belongs to the segmented object. The higher the probability value, the more confident the model is in its segmentation prediction for that voxel.

In the context of segmentation models, a connected component refers to a region of pixels or voxels in an image that are connected to each other and share a common property, here the property of belonging to a same class, for example the lesion class.

When a segmentation model is applied to an image, it generates a mask that assigns each pixel or voxel in the image to one of the segmented regions. Each segmented region corresponds to a connected component in the image, which can be further analyzed and processed separately.

Connected components may be identified and extracted using various algorithms, such as region-growing, flood-fill, or more generally connected component labeling. Once the connected components are identified, additional processing can be applied to each of them individually to extract useful information or perform further analysis.

A detection model is a type of deep learning model that is used to detect and localize objects within an image, here lesions. In the case of a 3D image as input for example, the detection model is used to identify the presence of objects within the 3D volume and to locate them in space by defining bounding boxes around them.

The output of a detection model is a set of bounding boxes that indicate the location of the objects within the input image. In the case of a 3D image, the output will be a set of 3D bounding boxes, each describing a rectangular cuboid that encompasses the detected object (here a candidate lesion). The bounding boxes may be represented by their coordinates in 3D space, along with their dimensions (width, height, and depth).

Each bounding box may be associated to a probability representing the confidence of the model in its prediction of the object detection. For each bounding box in the output, the probability value indicates the likelihood that the object is present within that box. The higher the probability value, the more confident the model is in its detection prediction for that object.

Said image may be a 2D-image or a 3D-image.

A 2D image, also known as a two-dimensional image, is a flat image that has width and height dimensions, but no depth. On the other hand, a 3D image, also known as a three-dimensional image, is an image that has width, height, and depth dimensions.

2D images are composed of a grid of pixels arranged in two dimensions and 3D images are composed of a grid of voxels arranged in three dimensions.

A medical image may be defined as a visual representation of internal body structures or functions acquired using various imaging modalities. These images are generated through the use of hardware and software systems that capture and process data, producing two-dimensional (2D) or three-dimensional (3D) images that aid in the diagnosis, treatment planning, and monitoring of various medical conditions. Medical images typically contain information about tissue density, composition, and function and are interpreted by radiologists, physicians, or other medical professionals with specialized training in image analysis. A medical image may take many different forms, depending on the imaging modality used and the type of medical condition being investigated.

Said medical image may be a CT-scan image, for example a portal venous CT-scan image.

Also known as computed tomography scans, CT scan images are 3D images created by combining a series of X-ray images taken from different angles around the body. CT scans can provide detailed information about the internal structure and composition of organs, bones, and tissues.

The main difference between a portal CT scan image and a CT scan image is the focus of the imaging. A CT scan image is a type of medical imaging that uses a computed tomography (CT) scanner to produce detailed images of any part of the body. A CT scan can be used to evaluate many different organs and tissues, such as the brain, chest, abdomen, and pelvis, and can be performed with or without the use of contrast dye.

On the other hand, a portal CT scan image is specifically focused on imaging the portal venous system, which includes the veins that drain blood from the gastrointestinal tract, spleen, and pancreas into the liver. A portal CT scan is a type of CT scan that is specifically designed to image the portal venous system in the abdomen, using specialized protocols that optimize the imaging of this system.

A portal CT scan can help to diagnose and monitor a range of conditions affecting the liver and pancreas lesions, including tumors, infections, and inflammation. It can also help to evaluate the response to treatment and guide further management of the condition. The portal venous system is an important component of the blood supply to the liver and other abdominal organs, and a portal CT scan can provide valuable information about its function and anatomy.

Said medical image may be an MRI (Magnetic Resonance Imaging) image.

An MRI image is a type of medical imaging that uses a strong magnetic field and radio waves to create detailed images of the inside of the body. MRI is a non-invasive and safe imaging technique that can provide information about the body's internal structures.

In medical imaging, a lesion refers to an abnormality or an area of tissue that appears different from the surrounding tissue in a medical image. Lesions can occur in any part of the body and can be caused by a variety of conditions, such as infections, inflammation, tumors, and injuries.

The term "lesion" is not specific to any particular medical condition or imaging modality and can be used to refer to a wide range of abnormal findings in medical images. Depending on the context, a lesion in a medical image could be a sign of a benign or malignant tumor, an infection, an autoimmune disorder, or a vascular abnormality, among other possibilities.

Inference phase, in the context of machine learning, refers to the stage where a trained model is used to make predictions on new or unseen data. During this phase, the model takes in the input data and produces an output based on the learned patterns from the training data.

In other words, the inference phase is the process of applying a trained model to real-world data to make predictions or decisions.

In the case were said image comprises multiple candidate lesions, the inference phase may comprise the following steps:

- segmenting each candidate lesion or some candidate lesions on said image using a trained segmentation model, to obtain a plurality of segmented regions representing the locations of the candidate lesions in the image, each of said segmented regions being a connected component and being associated to a probability that said connected component is a lesion,
- detecting each candidate lesion or some candidate lesions on said image using a trained detection model, to obtain a plurality of bounding boxes representing the location of the candidate lesions in said image, each of said bounding boxes being associated to a probability that said bounding box is a lesion,
- matching each connected component obtained by the segmentation model to one of the corresponding bounding boxes obtained by the detection model,
- predicting the probability that each connected component obtained by the segmentation model is a lesion, based on both the probability obtained by the segmentation model for the corresponding connected component and the probability obtained by the detection model of the bounding box that match with said corresponding connected component.

Different architectures of segmentation model may be used. Indeed, there are many different segmentation models that can be used for medical image analysis, for example:

- U-Net: This is a convolutional neural network (CNN) architecture for segmentation tasks, particularly in medical imaging. It uses a U-shaped architecture with skip connections to capture fine details and avoid the vanishing gradient problem.
- DeepLabv3+: This is another CNN architecture that uses atrous or dilatated convolution to capture features at different scales. It also incorporates a feature pyramid network to extract features from multiple scales.
- Mask R-CNN: This is a CNN architecture that combines object detection and segmentation. It first identifies objects in an image, and then segments them using a separate network.
- FCN: Fully convolutional networks (FCNs) are a class of CNNs that are designed specifically for pixel-wise segmentation. They use a series of convolutional layers to generate a segmentation map directly from an input image.
- SegNet: This is an encoder-decoder architecture that uses pooling indices to upsample feature maps during decoding. It is designed to be memory efficient and has been used successfully in medical image segmentation tasks.
- nnU-Net: This is a variation of U-Net that uses a nested architecture to improve performance. It also incorporates data augmentation and ensembling to further improve segmentation accuracy.
- PSPNet: Pyramid Scene Parsing Network (PSPNet) is a CNN architecture that uses a pyramid pooling module to capture multi-scale contextual information. It has been shown to perform well on both natural and medical image segmentation tasks.
- ResUNet++: This is a variation of U-Net that uses residual connections and dense skip connections to improve information flow and gradient propagation. It has been shown to achieve state-of-the-art performance on various medical image segmentation tasks.

These are just a few examples of the many segmentation models available for medical image analysis.

The segmentation model and/or the detection model may be a U-net model.

U-Net is a type of convolutional neural network (CNN) architecture named after its U-shaped architecture, which consists of an encoder and a decoder component. The encoder component consists of convolutional layers that downsample the image and capture its features, while the decoder component consists of transposed convolutional layers that upsample the features and produce a segmentation map.

The U-Net architecture is designed to work well with limited training data and can produce accurate results even with small training sets.

This is achieved using skip connections that allow the decoder to access high-resolution features from the encoder, enabling the network to reconstruct fine details in the segmentation map.

Said segmentation model may be a nnU-net model.

The nnU-Net model is an architecture for semantic segmentation tasks that uses a modified version of the U-Net architecture. Such model is disclosed in [B8]

The layers of the nnU-Net model can vary depending on the specific implementation and task, but an example of implementation may have the following layers:

- Contracting Path: The input image is first fed through a series of convolutional layers with a smaller kernel size to reduce the spatial dimensions of the image while increasing the number of feature maps. These layers are often followed by a max-pooling layer to further reduce the spatial dimensions of the feature maps.
- Bottleneck: The bottleneck layer is the narrowest part of the network and consists of multiple convolutional layers with a small kernel size. This layer helps to capture the most salient features of the input image while reducing the number of parameters in the network.
- Expansive Path: The expansive path of the network is used to upsample the feature maps to the original size of the input image. It consists of a series of convolutional layers with a larger kernel size than the contracting path and followed by an upsampling layer to double the spatial dimensions of the feature maps.
- Output Layer: The output layer of the network consists of a convolutional layer with a kernel size of 1 to produce the final segmentation mask. The output of this layer is usually fed through a softmax function to convert the output into a probability distribution over the classes.

The softmax function is a commonly used activation function for the output layer of a neural network that is used for multi-class classification problems. The softmax function takes a vector of logits (scores) as input and normalizes the scores so that they sum up to 1. This produces a probability distribution over the classes, where each element in the vector represents the probability of the input belonging to that class. In the context of semantic segmentation, the output of the softmax function represents the probability of each pixel belonging to a particular class. The class with the highest probability may then assigned to each pixel to produce the final segmentation mask.

The segmentation mask is a binary image that is used to represent the segmentation of an input image into different regions or objects. Each pixel in the segmentation mask is assigned a value that corresponds to a particular class or object in the input image.

For instance, in semantic segmentation, the segmentation mask assigns a unique label to each pixel in the image, indicating the class of the object to which it belongs.

Each pixel in the binary segmentation mask may thus be assigned a value of either 1 (lesion class) or 0 (no lesion class) based on its predicted class probability.

During training, the nnU-Net model learns to predict the probability of each pixel belonging to each class based on the input image. The model then applies a threshold to the probability values to produce the binary mask. Pixels with a probability above the threshold may be assigned to the lesion class (1), while pixels with a probability below the threshold are assigned to the "no lesion" class (0).

According to the present document, the probabilities outputted by the activation function (for example softmax function) of the last layer of the segmentation model may be used as such as an output of step (a) of the method, i.e., prior applying said threshold and obtaining said segmentation mask.

The task of predicting a class label of an object along with its location using a bounding box and a probability is known as object detection. There are several models that are capable of performing this task with high accuracy. Some of known models for object detection include:

- Faster R-CNN: A model that uses region proposal networks to generate object proposals, which are then classified using a classifier.
- YOLO (You Only Look Once): A real-time object detection model that processes the entire image in a single pass and predicts class probabilities and bounding boxes at the same time.
- SSD (Single Shot Detector): A model that uses a single convolutional network to predict object categories and bounding boxes.
- RetinaNet: A model that uses a feature pyramid network to detect objects at different scales and assign them appropriate scores.

According to the present document, the detection model may be a nn-Detection model.

nnDetection is a self-configuring framework for 3D (volumetric) medical object detection which can be applied to new medical data sets without manual intervention.

The model consists in a retina U-Net architecture, that can automatically adjust its architecture and hyperparameters during training based on the specific task and dataset, without requiring manual tuning by the user.

nnDetection consists in three stages: data preprocessing, network architecture selection, and hyperparameter optimization. In the data preprocessing stage, the input images are preprocessed to enhance the features of interest and remove noise. In the network architecture selection stage, a set of candidate neural network architectures is evaluated using a validation set to select the best architecture for the specific medical imaging task. Finally, in the hyperparameter optimization stage, the hyperparameters of the selected neural network are optimized using a search algorithm to further improve the performance of the object detection model.

Such model is disclosed in [B9]

In step (a), all pixels or voxels of said image having a probability less than a threshold may be removed from the segmented region.

Said threshold may be equal to 0.1 for example, for a probability comprised between 0 and 1.

If all pixels or voxels have a probability less than said threshold, the output of the method according to the present document may be that no candidate lesion is identified.

In step (a), the probabilities of all pixels or voxels of each segmented region may be averaged and said average value may be assigned as a single probability to the corresponding connected component.

In step (b), each bounding box comprising less than a threshold number of pixels or voxels may be removed.

For example, said threshold number may be comprised between 5 and 30, for example may be equal to 10.

In step (b), if several bounding boxes overlap, the overlapping bounding box having the highest probability may be selected.

In step (c), matching may be performed by:

- determining a bounding box surrounding said connected component,
- selecting the bounding box obtained in step (b) having a maximal overlapping, for example a maximal Intersection over Union (IoU), with said surrounding bounding box.

Said matching method may be called spatial matching.

In step (c), matching may be performed by selecting the bounding box obtained in step (b) overlapping said connected component and having the highest probability.

To that aim, a bounding box surrounding said connected component may be determined. Then, the bounding box obtained in step (b) with the highest probability and having an Intersection over Union with said surrounding bounding box that is strictly superior to 0 may be selected.

Said matching method may be called max score matching, as the score is the probability of the bounding box obtained in step (b).

In step (d), prediction of the probability that said at least one segmented region is a lesion may be computed via a logistic regression using, as features, the probability obtained by the segmentation model for the corresponding connected component and the probability obtained by the detection model of the bounding box that match with said corresponding connected component.

Logistic regression is a type of regression analysis that is used for binary classification problems, where the goal is to predict whether an input belongs to one of two classes (e.g., positive or negative). In the context of two different probabilities from two different models, logistic regression can be used to combine the predictions of the two models into a single output.

Assume we have two different models, each of which predicts the probability that an input belongs to one of the two classes. Let's call these probabilities p1 and p2, where p1 is the probability predicted by the first model, and p2 is the probability predicted by the second model. To combine the predictions of the two models, we can use logistic regression with p1 and p2 as input features and the binary class label (positive or negative) as the output.

In logistic regression, the output is a probability value between 0 and 1 that represents the likelihood that the input belongs to the positive class. The logistic function (also known as the sigmoid function) is used to transform the linear combination of the input features into a probability value:

$$P(Y = 1 \mid X) = 1 / (1 + exp(-(b0 + b1 * p1 + b2 * p2)))$$

where $P(Y = 1 \mid X)$ is the probability that the input belongs to the positive class, $p1$ and $p2$ are the input features, $b0$, $b1$, and $b2$ are the coefficients of the logistic regression model that are learned during training, and exp is the exponential function.

During training, the logistic regression model learns the optimal values of the coefficients b0, b1, and b2 by minimizing a loss function, such as the binary cross-entropy loss. Once the model is trained, it can be used to predict the class label (positive or negative) of new inputs by computing the probability using the logistic function and applying a threshold (e.g., 0.5) to the probability value. If the probability is greater than the threshold, the input is classified as positive; otherwise, it is classified as negative.

In step (a), if first model output a probability map without any connected component, but second model in step (b) output a bounding box with an associated probability, then the contour of the final lesion candidate may be a box. Its associated probability may then be a linear combination between p1 and p2 computed during step (d), where p1 is the probability of model from step (a) and equal to 0, and p2 is the probability of model from step (b).

In step (d), prediction of the probability that said at least one segmented region is a lesion may be computed via a logistic regression using, as additional features, complementary variables such as demographics (age, sex, ...), clinical variables (history of cancer, abdominal pain, ...), biological variables (PSA concentration in blood, bilirubin, ...), genomics (RNAseq profile, presence of genetic variants, ...), radiomics (lesion volume, lesion mean HU, ...), or any other relevant variable.

The present document also concerns a computer program comprising instructions for implementing the above-mentioned method, when this program is executed by a processor.

The present document also concerns a non-transitory computer-readable recording medium on which is recorded a program for implementing the above-mentioned method, when said program is executed by a processor.

A memory for storing at least instructions of a computer program is known as a program memory or instruction memory. This type of memory may store the instructions that the processor needs to execute a program, along with any associated data.

Several types of memory may be used, including for example Read-Only Memory (ROM), Flash Memory, Electrically Erasable Programmable Read-Only Memory (EEPROM), Random-Access Memory (RAM), Cache Memory, Virtual Memory.

The term "non-transient" indicates that the data stored on the medium remains even after the medium is removed from the computer system or the power is turned off.

Examples of computer-readable non-transient recording media include hard disk drives, solid-state drives, optical disks (such as CDs or DVDs), USB drives, and memory cards. These storage devices are commonly used to store software programs, data files, and other digital content that can be accessed and processed by a computer system.

In contrast, a transient medium is one that only temporarily stores data and is not capable of retaining the data once it is removed from the computer system or the power is turned off. Examples of transient media include computer memory (such as RAM) and cache memory.

The present document also concerns a computer device comprising:

- an input interface to receive at least one medical image,

- a memory for storing at least instructions of the above-mentioned computer program,

- a processor accessing to the memory for reading the aforesaid instructions and executing then the above-mentioned method,

- an output interface to provide an information based on the prediction of step (d).

An input interface for receiving an image is a hardware or software component that allows a user or system to input an image into a computer or other digital device for processing or analysis.

Said input interface may comprise:

- File upload: This is a software interface that allows users to upload image files from their local device to a remote server or application. This is a common method for transferring images to cloud-based services or web applications.

- Network protocols: These are software interfaces that allow devices to communicate with each other over a network. Network protocols such as TCP/IP or HTTP can be used to transmit images between devices.

Said input interface may be an interface between a medical imaging machine and a computer. Said interface may involves a data transfer protocol that allows images to be transmitted from the imaging machine to the computer for processing and analysis.

Some common software or hardware components of an input interface for medical imaging might include:

- DICOM (Digital Imaging and Communications in Medicine) protocol: This is a widely used protocol for transmitting medical imaging data, including images, annotations, and patient information. DICOM is a standard for medical imaging that allows images to be transferred between different devices and systems, regardless of vendor or technology.

- PACS (Picture Archiving and Communication System): This is a system for storing, retrieving, and distributing medical images and related data. PACS may include software for acquiring images from the imaging machine, transmitting images over a network, and storing images in a central database.

- Network interfaces: Medical imaging machines may have built-in network interfaces, such as Ethernet or Wi-Fi, which allow images to be transmitted directly to a computer or server. Alternatively, images may be transferred via removable media such as USB drives or CDs.

Said output interface may comprise a display, for example a monitor, a projector, a mobile device screen or a virtual reality headset screen.

BRIEF DESCRIPTION OF THE DRAWINGS

Other features, details and advantages will be shown in the following detailed description and on the figures, on which:

- figure 1 schematically shows an example of a computer device according to the present document,

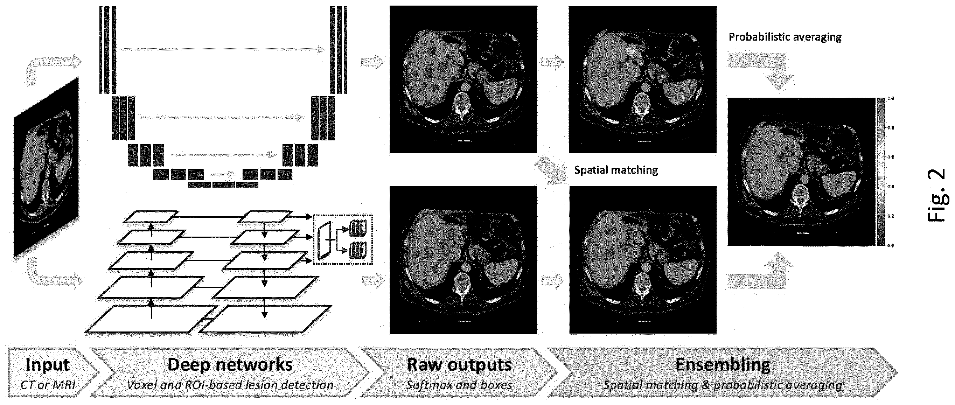

- figure 2 illustrate an overview of the proposed method for voxel-based semantic segmentation and box-based object detection model predictions,
- figure 3 illustrates the precision-recall and sensitivity-specificity curves computed on the test sets, for the two baseline methods (nnU-Net for semantic segmentation and nnDetection for object detection) and the two proposed ensemble approaches,
- figure 4 illustrates a qualitative comparison of the proposed ensembling with stand-alone baseline methods: nnU-Net raw outputs (first column), nnDetection raw outputs (second column), proposed ensembling (last column).

The annexed drawing includes meaningful colors. Although the present application is to be published in black and white, a colored version of the annexed drawing was filed before the Office.

DETAILED DESCRIPTION OF AN EXAMPLARY EMBODIMENT

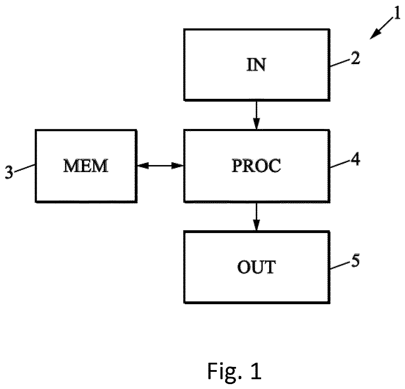

Figure 1 schematically shows an example of a computer device 1 according to the invention. Said computer device 1 comprises:

- an input interface 2,
- a memory 3 for storing at least instructions of a computer program,
- a processor 4 accessing to the memory 3 for reading the aforesaid instructions and executing the method according to the present document,
- an output interface 5.

Said method may comprise a training phase and an inference phase.
Before training phase, data may be collected and processed in order to train each of the segmentation model and the detection model.

Imaging data

This section describes an example of said collection of the data, where the different datasets are leveraged for three considered exemplary clinical applications: detection of lesions in livers, pancreas, and prostates of patients.

Liver

An internal database of 1975 portal-phase Computed Tomography (CT) scans collected from multiple medical institutions is split with a 80%/20% ratio to form the training and validation sets. The 1975 cases included patients who had a variety of hepatic lesions, ranging from benign cyst or granuloma to malignant hepatocellular carinoma or metastases. A separate test set of 65 cases, composed of 45 patients with liver cancer and 20 healthy liver donor candidates, is built by aggregating CT scans from the publicly-available LiTS [B1], IRCAD [B2] and CHAOS [B3] databases. Due to corrupted image metadata, 20 LiTS cases are discarded. Furthermore, only cases with lesions smaller than 2 cm in diameter may be included in the test set, in order to focus the evaluation on the most arduous targets for detection. Manual volumetric lesion segmentation maps are available for all collected images.

Pancreas

A total of 2134 portal CT scans from an internal database is used for training. Images are collected from multiple manufacturers and medical institutions. Among the 2134 patients, 1692 had a pancreatic lesion and 442 were healthy controls. Each scan was reviewed by a radiologist who systematically contoured the pancreas and the lesion when it was visible. Data is split in a training and validation sets of 1707 and 427 cases, respectively. An independent test dataset is created by relying on publicly available data from the Medical Decathlon Challenge [B4] and The Cancer Imaging Archive [B5]. This lead to a total of 361 independent test cases among which, 281 have a pancreatic lesion segmented by radiologists and 80 are healthy control subjects.

Prostate

A total of 1658 cases from the public PI-CAI [B6] and Prostate158 [B7] databases are used for training, validation and testing. Studies are guaranteed to be multi-center and multi-manufactures. Input MRI modalities available are T2-weighted (T2w) image, diffusion-weighted image (DWI) with highest b-value, and apparent diffusion coefficient (ADC) map. Among the 1658 cases, 509 are positive patients (425 from PI-CAI, 84 from Prostate158), i.e., patients with at least one clinically-significant lesion with ISUP $\geq$ 2. The other cases are negative, i.e., with benign tissue or indolent cancer. Data is split in 1398, 100, 160 cases for training, validation and test sets respectively.

Training phase - Ensembling method

An example of the training phase comprises different steps which are illustrated in Figure 1. During training, an ensembling technique is performed as it combines multiple models to improve the predictive performance. The idea behind such technique is that combining several models can lead to more accurate and robust predictions than any single model alone.

Training of a voxel-based semantic segmentation model

For each clinical application (liver, pancreas, prostate), a deep convolutional network segmenting the organ of interest and potential lesions is learned during the training phase, from the training data or training set previously described. Different input modalities are used depending on the clinical task: portal venous CT scans for liver and pancreatic cancer, and T2w (T2-weighted), ADC (apparent diffusion coefficient), DWI (diffusion-weighted imaging) MRI modalities for prostate cancer.

Said segmentation model may be a convolution model, for example a U-net model. The last layer of said segmentation model may comprises a SoftMax activation function and a thresholding operation to provide segmentation masks.

As mentioned above, in a segmentation model with a softmax activation function in the last layer, the output of the model is a probability distribution over the different classes for each pixel in the input image. To obtain a segmentation mask from the output probabilities, a thresholding operation is commonly applied. The threshold is a value between 0 and 1 that determines which class each pixel should be assigned to. For example, if the threshold is set to 0.5, any pixel with a probability greater than or equal to 0.5 for a particular class will be assigned to that class, and any pixel with a probability less than 0.5 for all classes will be considered background.

The resulting segmentation mask will be a binary image where each pixel is assigned to one of the classes or background. The threshold value can be adjusted to achieve a balance between precision and recall, depending on the specific requirements of the segmentation task.

It's worth noting that the choice of activation function in the last layer depends on the specific problem being addressed. While softmax is commonly used for multi-class segmentation tasks. However, other activation functions such as sigmoid or tanh can be used for binary segmentation tasks.

Raw predicted softmax maps (the probabilities outputted by the softmax activation function prior applying a threshold to obtain the segmentation mask) are post-processed into probabilistic lesion detection maps using the following approach:

(i) the probabilities of voxels having a probability inferior or equal to a threshold, for example 0.1, are set to 0, to obtain a probabilistic map. A probabilistic map of voxels is a 3D representation of a volume of interest where each voxel is assigned a probability value.

(ii) the resulting probabilistic map is decomposed into connected components,

(iii) a single lesion-level probability is assigned to each connected component by averaging the probabilities of all the voxels of said connected component.

Training of a box-based object detection model

Similar to the semantic segmentation model, an object detection model is trained for each clinical application. Each detection network takes the same inputs as the segmentation model. A single output class is defined for target lesions. The detection algorithm returns scored bounding boxes around suspicious regions in the image. Small boxes with less than 10 voxels may be removed.

Spatial and probabilistic ensembling

Voxel-based and box-based predictions were ensembled to create a final detection map in which each detected lesion was defined as a connected component with a single associated probability value.

This is done in two steps:

(i) matching between lesions detected by the semantic segmentation and object detection models;

(ii) combination of segmentation and detection models probabilities of matched lesions.

Two matching criteria between the connected components obtained by the segmentation model and the detection boxes obtained by the detection model are defined and tested.

- Spatial matching: for each connected component, determine the tightest-fitting bounding box encompassing said connected component and identify the bounding box predicted by the detection model that maximizing the overlap (i.e., having the maximum IoU) with respect to the bounding box of the connected component.

- Max-score matching: for each connected component, identify all overlapping boxes and associate with the one of maximal predicted lesion probability.

After the connected components and box predictions are associated in pairs, the corresponding lesion presence probabilities are combined with a two-parameter logistic regression model calibrated. For each clinical application, the logistic regression models are calibrated (i.e., trained) on the validation sets.

Evaluation of the ensembling technique

The evaluation aims to assess the performance of the said ensembling technique to determine how well the model generalizes to new, unseen data.

The evaluation involves measuring the performance on a set of metrics that are relevant to the problem being solved. The evaluation is performed using a separate validation dataset (see above defined validation) that was not used during training.

Baseline semantic segmentation and object detection models

Lesion segmentation and detection are performed using the nnU-Net [B8] and nn-Detection [B9], respectively. Both methods present a standardized framework in order to reliably design and train networks, thanks to robust data preprocessing, optimal hyper-parameter choices, and large data augmentation. These approaches are adapted to different imaging modalities (CT, Magnetic Resonance Imaging: MRI).

Metrics

The proposed ensembling method was evaluated at patient-level diagnosis and lesion-level detection. Patient-level performance were evaluated using the Area Under Receiver Operating Characteristic (AUC-ROC) metric. Lesion-level detection performance was evaluated using the Average Precision (AP) metric. For sake of comparison, the nnU-Net and nnDetection were also evaluated.

Hit criterion between predicted lesion and ground truth

Each predicted lesion is considered as a true positive if its 3D overlap with a ground truth lesion has an IoU $\geq$ 0.1. If not, the detected lesion is considered as a false positive. If several detected lesions match the same ground truth lesion, then only the lesion with the largest overlap is retained, and the other detected lesions are discarded.

Results

Prediction performances are reported in Table 1 below

| Method | Lesion-level AP (%) | | | Patient-level AUC (%) | | |
| --- | --- | --- | --- | --- | --- | --- |
| | Liver | Pancreas | Prostate | Liver | Pancreas | Prostate |
| nnU-Net | 73.3 | 66.1 | 48.2 | 92.3 | **92.0** | **85.4** |
| nnDetection | 58.6 | 56.7 | 48.8 | 82.1 | 76.3 | 81.2 |
| MS ensembling | 71.8 | 66.0 | **56.3** | **93.9** | 90.9 | 84.7 |
| IoU ensembling | **73.4** | **66.8** | 55.7 | 92.9 | 91.0 | 83.7 |

Table 1: Comparison of the proposed method with stand-alone baseline models (nnU-Net for semantic segmentation and nnDetection for detection). Patient-level ROC-AUCand lesion-level Average Precision (AP) is presented. "MS ensembling" stands for maxscore matching after logistic regression ensembling; "IoU ensembling" stands for spatial matching after logistic regression ensembling. Best result in each column is in bold, Second best is underlined. ROC: Receiver Operating Characteristic. AUC: Area Underthe Curve.

In terms of lesion detection performances, spatial ensembling (IoU ensembling) led to better AP compared to nnU-Net and nnDetection on the three organs, with a maximum increase of 7.5 points obtained for prostatic lesions.

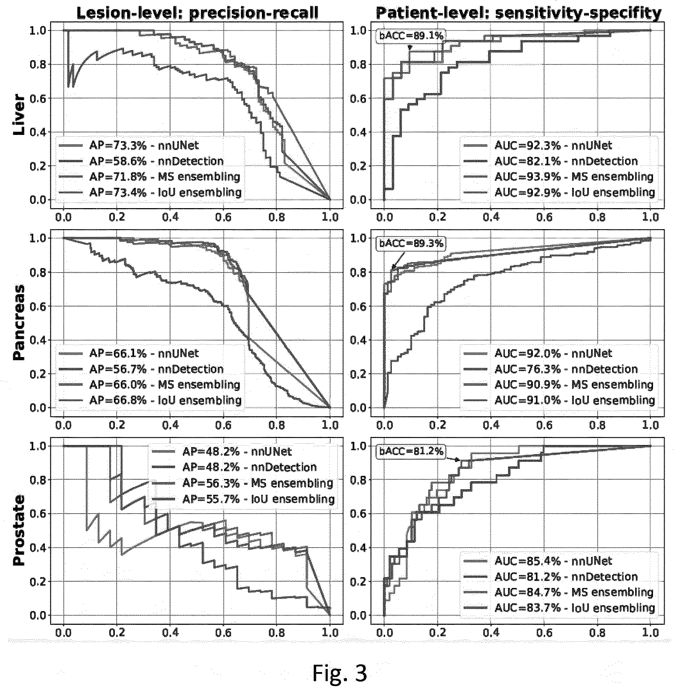

Sensitivity-specificity curves are shown in Figure 3, for each test set and each approach. While max score ensembling (MS ensembling) only improved the AUC in the case of liver cancer with a gain of 1.6 points, the best operating point define as the best trade-of between sensitivity and specificity (bACC in Figure 3), was systematically obtained with the ensembled approach.

Ensembling led to a particularly pronounced boost in the case of prostate cancer. Prostate lesions visible on MRI are particularly difficult to detect by experts. In this context, detection of ambiguous lesions may have benefited from the fusion of semantic and detection networks. For liver and pancreatic cancer, performance improvement at lesion-level after ensembling also appears.

Precision-recall and sensitivity-specificity curves are shown in Figure 3.

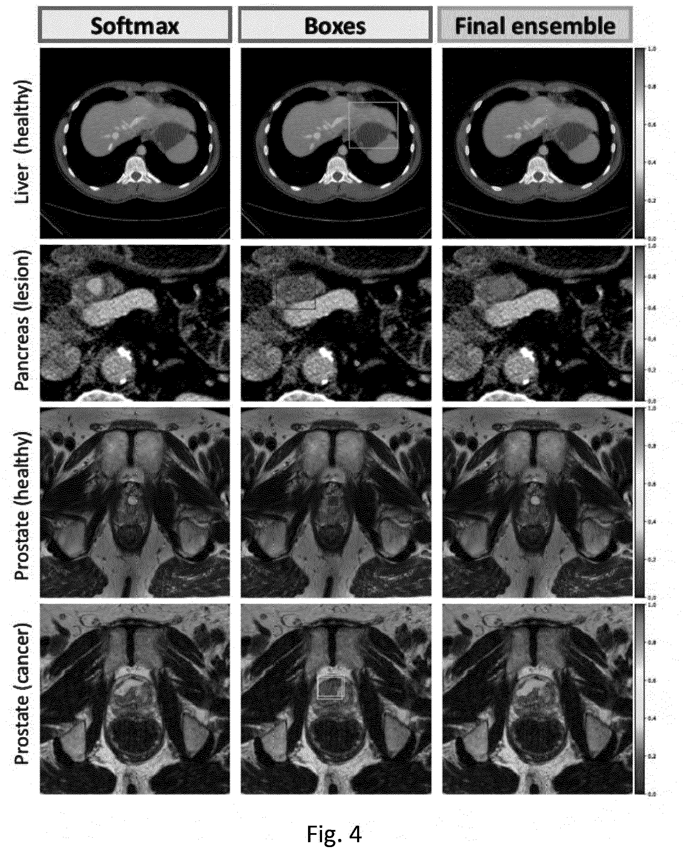

Figure 4 Provides a qualitative comparison of the proposed approach with Baseline standalone methods. Two healthy cases are shown (one for liver, one for prostate): in both cases, nnU-net predicted a relatively high probability, while the nnDetection proposed a low probability. Therefore, ensembling is beneficial compared to relying on the sole nnU-Net output. Two lesion cases are also shown (one case for pancreas, one for prostate). For pancreas, nnU-Net predicted a relatively low probability ($p \approx 0.5$), while the nnDetection proposed a high probability ($p \approx 0.9$). Ensembling increased the confidence associated with the detected lesion. For the prostate case, it can be noted that nnDetection proposed two boxes very close to each other around the nnU-Net lesion: one with a probability $p \approx 0.6$, the other with $p \approx 0.4$. In that case, final ensembling benefit from max score matching type rather than spatial matching.

**Bibliography**

[B1] Patrick Bilic and et al. The liver tumor segmentation benchmark (lits). Medical Image Analysis, 84:102680, 2023.

[B2] Luc Soler, Alexandre Hostettler, Vincent Agnus, Arnaud Charnoz, J Fasquel, Jo-han Moreau, A Osswald, Mourad Bouhadjar, and Jacques Marescaux. 3d image reconstruction for comparison of algorithm database: A patient specifi anatomical and medical image database. IRCAD, Strasbourg, France, Tech. Rep, 1(1), 2010.

[B3] Ali Emre Kavur, M. Alper Selver, Oˇguz Dicle, Mustafa Barys, and N. Sinem Gezer.CHAOS - Combined (CT-MR) Healthy Abdominal Organ Segmentation Challenge Data, April 2019.

[B4] Amber L. Simpson, Michela Antonelli, Spyridon Bakas, Michel Bilello, KeyvanFarahani, Bram van Ginneken, Annette Kopp-Schneider, Bennett A. Landman, Geert Litjens, Bjoern H. Menze, Olaf Ronneberger, Ronald M. Summers, Patrick Bilic, Patrick Ferdinand Christ, Richard K. G. Do, Marc Gollub, Jennifer Golia Pernicka, Stephan Heckers, William R. Jarnagin, Maureen McHugo, Sandy Napel, Eugene Vorontsov, Lena Maier-Hein, and M. Jorge Cardoso. A large annotated medical image dataset for the development and evaluation of segmentation algo-rithms. CoRR, abs/1902.09063, 2019.

[B5] Holger R. Roth, Le Lu, Amal Farag, Hoo-Chang Shin, Jiamin Liu, Evrim B. Turk-bey, and Ronald M. Summers. Deeporgan: Multi-level deep convolutional networks for automated pancreas segmentation. In Nassir Navab, Joachim Hornegger, William M. Wells III, and Alejandro F. Frangi, editors, Medical Image Computing and Computer-Assisted Intervention - MICCAI 2015 - 18th International Conference Munich, Germany, October 5-9, 2015, Proceedings, Part I, volume 9349 of Lecture Notes in Computer Science, pages 556-564. Springer, 2015.

[B6] Anindo Saha, Jasper Jonathan Twilt, Joeran Sander Bosma, Bram van Ginneken,Derya Yakar, Mattijs Elschot, Jeroen Veltman, Jurgen Futterer," Maarten de Rooij, and Henkjan Huisman. The PI-CAI Challenge: Public Training and Development Dataset, June 2022.

[B7] Lisa C Adams, Marcus R Makowski, Gunther̈ Engel, Maximilian Rattunde, FelixBusch, Patrick Asbach, Stefan M Niehues, Shankeeth Vinayahalingam, Bram van Ginneken, Geert Litjens, and Keno K Bressem. Prostate158 - an expert-annotated 3t mri dataset and algorithm for prostate cancer detection. Computers in Biology and Medicine, 148:105817, 2022.

[B8] Fabian Isensee, Paul F. Jaeger, Simon A. A. Kohl, Jens Petersen, and Klaus H.Maier-Hein. nnu-net: a self-configurin method for deep learning-based biomedical image segmentation. Nature Methods, 18(2):203-211, 2021.

[B9] Michael Baumgartner, Paul F Jager, Fabian Isensee, and Klaus H Maier-Hein.nndetection: a self-configurin method for medical object detection. In Medical Image Computing and Computer Assisted Intervention-MICCAI 2021: 24th International Conference, Strasbourg, France, September 27-October 1, 2021, Proceedings, Part V 24, pages 530-539. Springer, 2021.

**Claims**

**1.** A method implemented by computer means for determining a probability of the presence of at least one candidate lesion in at least one medical image, said method including an inference phase comprising the following steps:

(a) segmenting said at least one candidate lesion on said image using a trained segmentation model, to obtain at least one segmented region representing the location of the at least one candidate lesion in the image, said at least one segmented region being a connected component and being associated to a probability that said connected component is a lesion,
(b) detecting said at least one candidate lesion on said image using a trained detection model, to obtain at least one bounding box representing the location of the candidate lesion in said image, said at least one bounding box being associated to a probability that said bounding box is a lesion,
(c) matching the at least one connected component obtained by the segmentation model to a corresponding bounding box obtained by the detection model,
(d) predicting the probability that said at least one connected component obtained by the segmentation model is a lesion, based on both the probability obtained by the segmentation model for the corresponding connected component and the probability obtained by the detection model of the bounding box that match with said corresponding connected component.

**2.** The method according to preceding claim, wherein the segmentation model and/or the detection model is a U-net model.

**3.** The method according to any of the preceding claims, wherein, in step (a), all pixels or voxels of said image having a probability less than a threshold are removed from the segmented region.

**4.** The method according to any of the preceding claims, wherein, in step (a), the probabilities of all pixels or voxels of each segmented region are averaged and said average value is assigned as a single probability to the corresponding connected component.

**5.** The method according to any of the preceding claims, wherein, in step (b), each bounding box comprising less than a threshold number of pixels or voxels is removed.

**6.** The method according to any of the preceding claims, wherein, in step (b), if several bounding boxes overlap, the bounding box having the highest probability is selected.

**7.** The method according to any of the preceding claims, wherein, in step (c), matching is performed by

- determining a bounding box surrounding said connected component,
- selecting the bounding box obtained in step (b) having a maximal Intersection over Union with said surrounding bounding box.

**8.** The method according to any of the claims 1 to 6, wherein, in step (c), matching is performed by selecting the bounding box obtained in step (b) overlapping said connected component and having the highest probability.

**9.** The method according to any of the preceding claims, wherein, in step (d), prediction of the probability that said at least one segmented region is a lesion is computed via a logistic regression using, as features, the probability obtained by the segmentation model for the corresponding connected component corresponding or segmented region and the probability obtained by the detection model of the bounding box that match with said corresponding connected component.

**10.** The method according to any of the preceding claims, wherein, in step (d), prediction of the probability that said at least one segmented region is a lesion is computed via a logistic regression using, as additional features, complementary variables such as demographics, clinical variables, biological variables, genomics, radiomics .

**11.** Computer program comprising instructions for implementing the method according to one of claims 1 to 11, when this program is executed by a processor.

**12.** A non-transitory computer-readable recording medium on which is recorded a program for implementing the method according to one of claims 1 to 11, when said program is executed by a processor.

**12.** Computer device (1) comprising:

- an input interface (2) to receive at least one medical image,
- a memory (3) for storing at least instructions of a computer program according to claim 12,
- a processor (4) accessing to the memory (3) for reading the aforesaid instructions and executing then the method according to one of claims 1 to 11,
- an output interface (5) to provide an information based on the prediction of step (d).

Fig. 1

Fig. 2

| Input | Deep networks | Raw outputs | Ensembling |
|---|---|---|---|
| CT or MRI | Voxel and ROI-based lesion detection | Softmax and boxes | Spatial matching & probabilistic averaging |

Fig. 3

Fig. 4

Europäisches
Patentamt

European
Patent Office

Office européen
des brevets

# EUROPEAN SEARCH REPORT

Application Number

EP 23 17 7807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ISLAM MUHAMMAD MOBAIDUL ET AL: "Pedestrian Detection for Autonomous Cars: Inference Fusion of Deep Neural Networks", IEEE TRANSACTIONS ON INTELLIGENT TRANSPORTATION SYSTEMS, IEEE, PISCATAWAY, NJ, USA, vol. 23, no. 12, 1 December 2022 (2022-12-01), pages 23358-23368, XP011929755, ISSN: 1524-9050, DOI: 10.1109/TITS.2022.3210186 [retrieved on 2022-09-30] * sections II.A, II.B, II.C; figure 2 * | 1-13 | INV. G06T7/00 G06T7/11 G06T7/194 |
| A | US 2018/089505 A1 (EL-KHAMY MOSTAFA [US] ET AL) 29 March 2018 (2018-03-29) * paragraphs [0042], [0062]; figures 2,7 * | 1-13 | |
| A | US 2022/319008 A1 (BENGTSSON NILS GUSTAV THOMAS [US] ET AL) 6 October 2022 (2022-10-06) * paragraphs [0142] – [0147]; figure 3 * | 1-13 | TECHNICAL FIELDS SEARCHED (IPC)<br><br>G06T |

The present search report has been drawn up for all claims

| Place of search | Date of completion of the search | Examiner |
|---|---|---|
| Munich | 22 November 2023 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 475 071 A1

### ANNEX TO THE EUROPEAN SEARCH REPORT
### ON EUROPEAN PATENT APPLICATION NO.

EP 23 17 7807

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2023

| Patent document cited in search report | | Publication date | Patent family member(s) | | Publication date |
|---|---|---|---|---|---|
| US 2018089505 | A1 | 29-03-2018 | CN | 107871117 A | 03-04-2018 |
| | | | KR | 20180033037 A | 02-04-2018 |
| | | | TW | 201814591 A | 16-04-2018 |
| | | | US | 2018089505 A1 | 29-03-2018 |
| US 2022319008 | A1 | 06-10-2022 | CN | 114830175 A | 29-07-2022 |
| | | | EP | 4078510 A1 | 26-10-2022 |
| | | | JP | 2023507109 A | 21-02-2023 |
| | | | KR | 20220117236 A | 23-08-2022 |
| | | | US | 2022319008 A1 | 06-10-2022 |
| | | | WO | 2021126370 A1 | 24-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PATRICK BILIC et al.** The liver tumor segmentation benchmark (lits). *Medical Image Analysis,* 2023, vol. 84, 102680
- **LUC SOLER ; ALEXANDRE HOSTETTLER ; VINCENT AGNUS ; ARNAUD CHARNOZ ; J FASQUEL ; JO-HAN MOREAU ; A OSSWALD ; MOURAD BOUHADJAR ; JACQUES MARESCAUX.** 3d image reconstruction for comparison of algorithm database: A patient specifi anatomical and medical image database. *IRCAD, Strasbourg, France, Tech. Rep,* 2010, vol. 1 (1
- **AMBER L. SIMPSON ; MICHELA ANTONELLI ; SPYRIDON BAKAS ; MICHEL BILELLO ; KEYVANFARAHANI ; BRAM VAN GINNEKEN ; ANNETTE KOPP-SCHNEIDER ; BENNETT A. LANDMAN ; GEERT LITJENS ; BJOERN H. MENZE.** A large annotated medical image dataset for the development and evaluation of segmentation algo-rithms. *CoRR,* 2019
- Deeporgan: Multi-level deep convolutional networks for automated pancreas segmentation. **HOLGER R. ROTH ; LE LU ; AMAL FARAG ; HOO-CHANG SHIN ; JIAMIN LIU ; EVRIM B ; TURK-BEY ; RONALD M. SUMMERS.** Medical Image Computing and Computer-Assisted Intervention - MICCAI 2015 - 18th International Conference Munich, Germany, October 5-9, 2015, Proceedings. Springer, 05 October 2015, vol. 9349, 556-564
- **ANINDO SAHA ; JASPER JONATHAN TWILT ; JOERAN SANDER BOSMA ; BRAM VAN GINNEKEN ; DERYA YAKAR ; MATTIJS ELSCHOT ; JEROEN VELTMAN ; JURGEN FUTTERER ; MAARTEN DE ROOIJ ; HENKJAN HUISMAN.** *The PI-CAI Challenge: Public Training and Development Dataset,* June 2022
- **FABIAN ISENSEE ; PAUL F. JAEGER ; SIMON A. A. KOHL ; JENS PETERSEN ; KLAUS H.MAIER-HEIN.** nnu-net: a self-configurin method for deep learning-based biomedical image segmentation. *Nature Methods,* 2021, vol. 18 (2), 203-211
- nndetection: a self-configurin method for medical object detection. **MICHAEL BAUMGARTNER ; PAUL F JAGER ; FABIAN ISENSEE ; KLAUS H MAIER-HEIN.** Medical Image Computing and Computer Assisted Intervention-MICCAI 2021: 24th International Conference, Strasbourg, France, September 27-October 1, 2021, Proceedings. Springer, 27 September 2021, vol. 24, 530-539